# EUROPEAN PATENT SPECIFICATION

(11) **EP 0 456 330 B1**
(45) Date of publication and mention of the grant of the patent: **19.07.1995**
(21) Application number: 91201123.6
(22) Date of filing: 08.05.1991
(51) Int. Cl.: A01D 34/76

(54) **A mowing machine**
Mähmaschine
Faucheuse

(30) Priority: 09.05.1990 NL 9001102
(43) Date of publication of application: 13.11.1991
(73) Proprietor: C. van der Lely N.V., NL-3155 PD Maasland (NL)
(72) Inventor: Sikkema, Sape, NL-3143 CP Maassluis (NL)
(74) Representative: Mulder, Herman

(56) References cited:
- EP-A- 0 009 134
- EP-A- 0 242 311
- FR-A- 2 489 652
- GB-A- 2 081 565
- NL-A- 7 210 288
- NL-A- 7 907 553
- NL-A- 8 203 832
- NL-A- 8 501 817

## Description

The present invention relates to a mowing machine comprising a plurality of mowing members which are arranged capable of rotation about substantially vertical axes to a supporting beam, inside which are accommodated the drive means for driving the mowing members, which supporting beam, during operation, extends above the soil transversely to the direction of operative travel and is connected rigidly to a housing, which, relative to the supporting beam, extends upwardly, and around which housing there is arranged a further mowing member with, arranged thereon and connected rigidly thereto a drum-shaped element, the mowing machine further comprising a transmission box, rigidly connected to the upper portion of the housing, with first transmission members for transferring the movement of an ingoing shaft from the transmission box to a drive shaft extending through the housing, by means of which drive shaft are driven the drive means in the supporting beam, and with second transmission members for transferring the movement of the ingoing shaft to the drum-shaped element.

A mowing machine of this type is known from NL-A-8501817 and effects a mowing also at the supporting beam end where the housing is located. Without the further mowing member around the housing the crop to be mown is pushed towards the soil when the machine travels in the forward direction, so that the machine, when passing the area in a next run to mow the relevant strip of crop, does not cut same at the proper height. Furthermore, use of said further mowing member means an increased effective working width of the machine.

In NL-A-8501817 the first and second transmission members have a common conical gearwheel on the ingoing shaft of the transmission box. From the point of view of production, such a gearwheel is rather complicated and expensive. Therefore, the object of the invention is to realize a construction wherein with the usual gear wheels a transmission is obtained from the ingoing shaft to the drive shaft and to the drum-shaped element on the further mowing member.

According to the invention, the machine of the above-defined type is characterized in that the second transmission members comprise a transmission, particularly a conical gear transmission for transferring the movement of the ingoing shaft to an auxiliary shaft, while a further transmission is provided for transferring the movement of the auxiliary shaft to the drum-shaped element. In a specific embodiment in accordance with the invention, the auxiliary shaft then extends parallel to the axis of the drum-shaped element. In addition, the further transmission in accordance with the invention may be constituted by a belt transmission.

In a first specific embodiment in accordance with the invention, the first transmission members include a cylindrical gear transmission for transferring the movement of the auxiliary shaft to the drive shaft. In a second specific embodiment in accordance with the invention, the second transmission members are arranged such that they are separated from the first transmission members. More particularly, also the first transmission members then include a conical gear transmission for transferring the movement of the ingoing shaft to the drive shaft.

In a third specific embodiment in accordance with the invention, the auxiliary shaft does not extend parallel to the axis of the drum-shaped element, but they may intersect, and the further transmission is constituted by a second conical gear transmission.

In accordance with the invention, the first transmission members may constitute part of the second transmission members. In this situation, the second transmission members may include, in addition to the first transmission members, a further transmission for transferring the movement of the drive shaft to the drum-shaped element. In a fourth specific embodiment, the further transmission may then include a first cylindrical gear transmission for transferring the movement of the drive shaft to an auxiliary shaft, as well as a second cylindrical gear transmission for transferring the movement of the auxiliary shaft to the drum-shaped element.

So as to provide that all the mowing members are driven efficiently at the same speed, it holds for the above-defined embodiments that, preferably, the transmission ratio of the second transmission members is equal to that of the first transmission members. Moreover, it should be noted that the ingoing shaft of the transmission box is driven from the power take-off shaft of a tractor, to which the machine is coupled during operation.

In order to ensure the drive of the drum-shaped element from the transmission box, in accordance with the invention, at or near the upper end of the drum-shaped element there is arranged therearound and connected rigidly thereto a gear ring; this gear ring then constitutes part of the said further transmission. It is alternatively possible to provide a gear ring surrounding the housing at the upper side of the drum-shaped element and connected rigidly thereto; also this gear ring will then constitute part of the said further transmission.

For a better understanding of the invention and to show how the same may be carried into effect, reference will now be made, by way of example, to the accompanying drawings, in which:
Figure 1 is a schematic elevational side view of the mowing machine in accordance with the invention;
Figure 2 shows a first embodiment of the transmission for transferring the movement of the ingoing shaft from the transmission box to the drive means in the supporting beam, and
Figures 3, 4 and 5 show further embodiments of such a transmission.

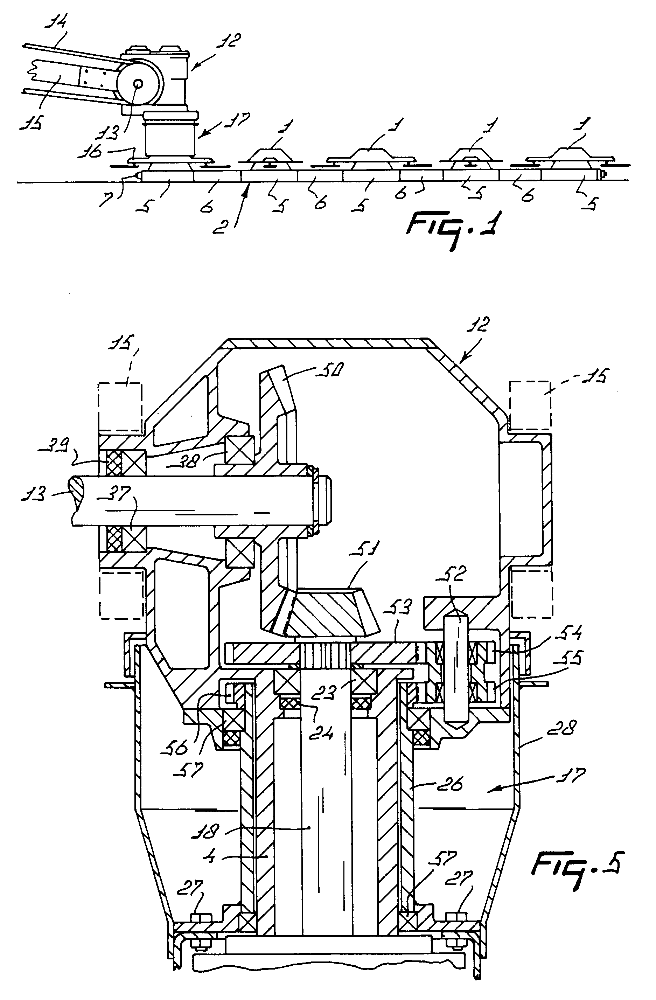

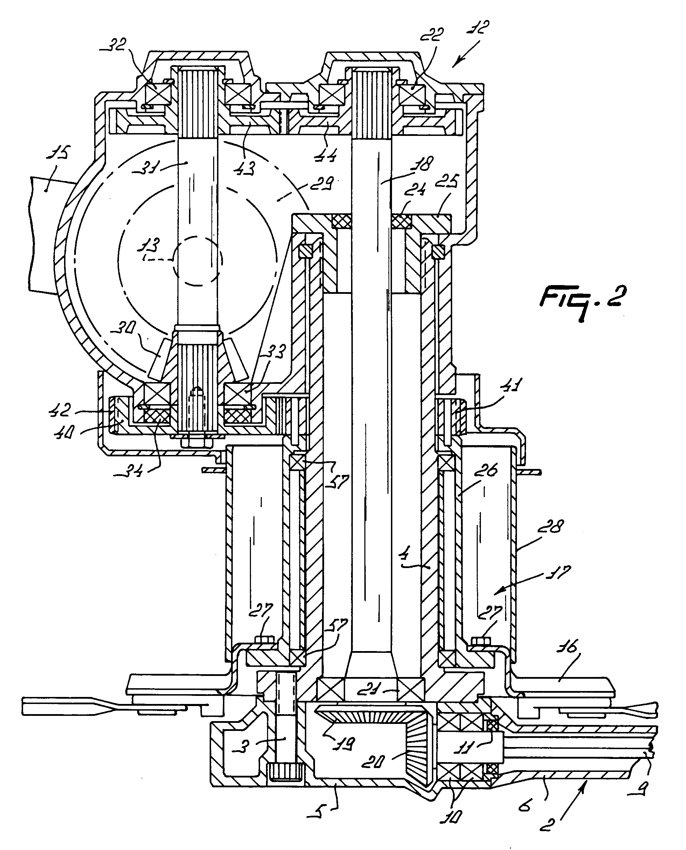

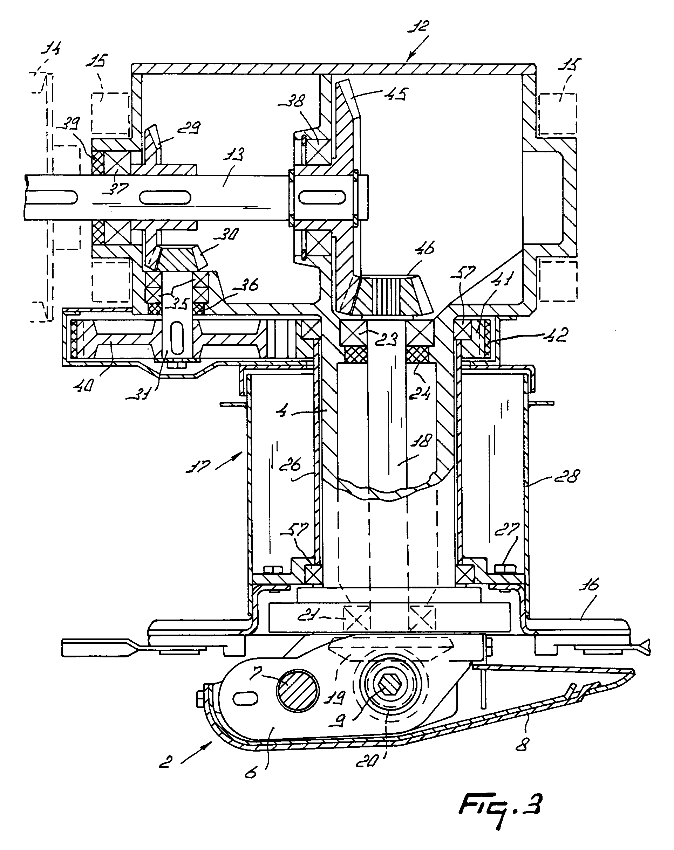

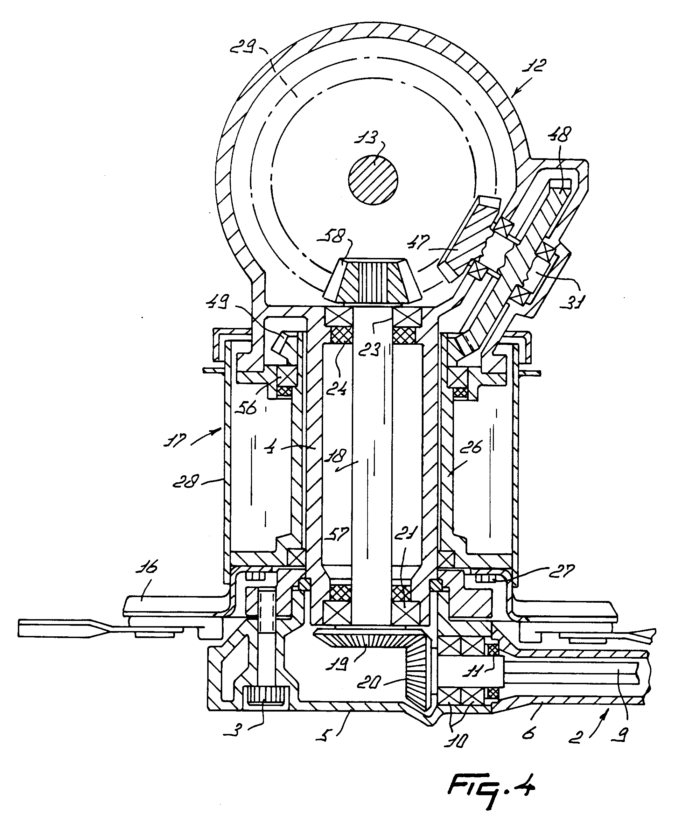

Figure 1 illustrates a mowing machine comprising a plurality of mowing members 1 which are arranged capably of rotation about substantially vertical axes to a supporting beam 2, inside which are accommodated the drive means for driving the mowing members 1. By means of bolts 3, the supporting beam 2 is connected rigidly to a housing 4 which, relative to this beam, extends upwardly, and which supporting beam, during operation, extends above the soil substantially transversely to the direction of operative travel. In the present embodiment, the supporting beam 2 is assembled from mowing elements 5 and intermediate elements 6, always one intermediate element being arranged between two mowing elements. Of course, it is alternatively possible to manufacture the supporting beam 2 as an integral whole. The mowing elements 5 and the intermediate elements 6 are kept pushed against each other by means of a tensile rod 7. Under the mowing elements 5 there are arranged in a customary manner slide shoes 8 (see Figure 3). Although the drive means in the supporting beam 2 may be constituted by cylindrical gears arranged in side-by-side relationship, in the present embodiment the drive means are constituted by a drive shaft 9 extending in the supporting beam 2, on which shaft, inside the mowing elements 5, there is arranged a conical gear transmission to the relevant mowing members 1. The drive shaft 9 may be constituted by a relatively thin, torsion spring shaft which, preferably, has a quadrangular or hexagonal cross-section. Inside the supporting beam portion located under the housing 4, this shaft 9 is bearing-supported by means of bearings 10. A sealing member 11 is provided next to the bearings 10; similar sealing members are also provided in all those positions in the supporting beam 2 where the mowing elements 5 are coupled to the intermediate elements 6. The drive of the drive means in the supporting beam 2, i.e. the drive shaft 9, is effected from a transmission box 12 which is connected rigidly to the upper portion of the housing 4 and through the said housing 4. The ingoing shaft 13 of the transmission box 12 can be driven from the power take-off shaft of a tractor, to which the mowing machine is coupled during operation. For the transfer of the movement from the power take-off shaft to the ingoing shaft 13 of the transmission box 12 use can be made of a belt transmission 14. In all further respects the mowing machine can be coupled in the customary manner to the lifting hitch of the tractor by means of a pivotal arm 15 (see Figure 3) which is connected to the housing 4 or to the transmission box 12.

In order to increase the effective working width of the mowing machine and to prevent, in the position where the housing 4 is connected to the supporting beam 2, the crop to be mown from being pushed towards the soil when the machine travels forwardly, so that the mowing machine, when passing this area in a next run to mow the relevant strip of crop, does not cut same at the proper height, around the housing 4 there is arranged a further mowing member 16 which is driven from the transmission box 12. On top of this further mowing member 16 there is arranged and connected rigidly thereto a drum-shaped element 17 which at or near its upper end is driven from the transmission box 12. The mowing machine includes first transmission members for transferring the movement of the ingoing shaft 13 from the transmission box 12 to a drive shaft 18 extending through the housing 4. The movement of the drive shaft 18 is furthermore transferred by means of conical gearwheels 19 and 20 to the drive shaft 9 in the supporting beam 2. In the lower portion of the housing 4, the drive shaft 18 is supported by means of a bearing 21.

In the embodiment shown in Figure 2, the drive shaft 18 is supported by means of a bearing 22 in the upper region of the transmission box 12, whereas in the embodiments of Figures 3, 4 and 5 this drive shaft 18 is supported by means of a bearing 23 in the upper region of the housing 4. The space between the housing 4 and the drive shaft 18 is sealed from the oil-filled transmission box 12 by means of a sealing element 24 arranged around the drive shaft 18. In the embodiment shown in Figure 2, this sealing element 24 is provided at the upper side of a covering member 25 for the housing 4, whilst in the embodiments shown in Figures 3, 4 and 5 the sealing element is provided directly under the bearing 23.

The mowing machine furthermore includes second transmission members for transferring the movement of the ingoing shaft 13 from the transmission box 12 to the drum-shaped element 17. This drum-shaped element 17 is assembled from an inner jacket 26, which is rotatable about the housing 4 by means of bearings 57 and to which the further mowing member 16 is connected rigidly by means of bolts 27, and an outer jacket 28, which is also connected rigidly to the further mowing member 16 either by welding or by means of bolts. The inner jacket may be an integral unit or consist of a plurality of portions. The structure of the drum-shaped element 17 is determined to a significant extent by manufacturing and other technical reasons and is of no relevance to the present invention.

In the embodiments shown in Figures 2, 3 and 4, the second transmission members include a conical gear transmission constituted by conical gearwheels 29 and 30 for transferring the movement of the ingoing shaft 13 to an auxiliary shaft 31, as well as a further transmission for transferring the movement of the auxiliary shaft 31 to the drum-shaped element 17.

In the embodiments shown in Figures 2 and 3, the auxiliary shaft 31 extends parallel to the axis of the drum-shaped element 17 and to the drive shaft 18. In the embodiment of Figure 2, the auxiliary shaft 31 is supported in the upper region of the transmission box 12 by a bearing 32 and in the lower region thereof by a bearing 33. The auxiliary shaft 31 projects from the bottom side of the transmission box 12, which box is sealed in that region by means of a sealing element 34. In the embodiment of Figure 3, the auxiliary shaft is bearing-supported only in the lower region of the transmission box 12, i.e. by means of a bearing 35. In this case, too, the auxiliary shaft projects outwardly from the bottom side of the transmission box 12, whilst the transmission box is sealed again in that region by means of a sealing element 36. In addition, in this embodiment is also shown the bearing support of the ingoing shaft 13 in the transmission box 12 by means of bearings 37 and 38, as well as the seal of the transmission box 12 in that region where the ingoing shaft enters this box by means of the sealing element 39. In both the embodiment of Figure 2 and in that of Figure 3, the further transmission is constituted by a belt transmission. This belt transmission is assembled from a conical gear 40 which is secured at the lower end of the auxiliary shaft 31, and a gear ring 41 which at the upper side of the drum-shaped element 17 is arranged rigidly connected thereto around the housing 4 (Figure 2), or which is rigidly connected at or near the upper end of the drum-shaped element 17 therearound (Figure 3). Around the gearwheel 40 and the gear ring 41 there is passed a toothed belt or chain 42.

The main difference between the embodiments shown in Figures 2 and 3 is that in the embodiment of Figure 3 the second transmission members are disposed in such a manner that they are separated from the first transmission members, whereas this is not the case in the embodiment shown in Figure 2. In the embodiment shown in Figure 2, the first transmission members include a conical gear transmission for transferring the movement of the auxiliary shaft 31 to the drive shaft 18. This conical gear transmission is constituted by a conical gear 43 provided in the transmission box around the auxiliary shaft 31 and a conical gear 44 co-operating therewith, which gear 44 is applied in the transmission box around the upper end of the drive shaft 18. In the embodiment shown in Figure 3, the first transmission members include a conical gear transmission constituted by a conical gearwheel 45 fitted on the ingoing shaft 13 and a conical gearwheel 46 fitted on the drive shaft 18.

In the embodiment shown in Figure 4, the auxiliary shaft 31 does not extend parallel to the axis of the drum-shaped element; the centre line of the auxiliary shaft 31 intersects the axis of the drum-shaped element 17 and, hence, the centre line of the drive shaft 18.

In this embodiment, the further transmission is constituted by a second conical gear transmission, constituted by the conical gearwheel 47 which is mounted on the auxiliary shaft 31 and co-operates with the conical gearwheel 29, as well as a conical gearwheel 48 which is also mounted on the auxiliary shaft 31 and co-operates with a conical gear ring 49 which is fitted rigidly around the inner jacket 26 of the drum-shaped element 17. In this embodiment, the first transmission members are constituted by the said conical gearwheel 29 and, co-operating therewith, a conical gearwheel 48 mounted on the drive shaft 18.

In the embodiment shown in Figure 5, the first transmission members fully constitute part of the second transmission members. In this embodiment, the second transmission members include, in addition to the first transmission members, a further transmission for transferring the movement of the drive shaft 18 to the drum-shaped element 17. In other words, the second transmission members comprise both a conical gear transmission constituted by a conical gearwheel 50 mounted on the ingoing shaft 13 and, co-operating therewith, a conical gearwheel 51 mounted at the upper end of the drive shaft 18, and the said further transmission constituted by a first cylindrical gear transmission for transferring the movement of the drive shaft 18 to an auxiliary shaft 52 and a second cylindrical gear transmission for transferring the movement of the auxiliary shaft 52 to the drum-shaped element 17. The first cylindrical gear transmission is constituted by the cylindrical gearwheel 53, which is in a fixed position under the conical gearwheel 51 on the drive shaft 18, and a second cylindrical gearwheel 54 mounted on the auxiliary shaft 52. The second cylindrical gear transmission is constituted by a cylindrical gearwheel 55, which is also mounted on the auxiliary shaft 52 and, in the present embodiment, constitutes an integral whole with the cylindrical gearwheel 54, and a gear ring 56 arranged around the inner wall 26 of the drum-shaped element 17. In the embodiment of Figure 5, the ingoing shaft 13 is bearing-supported in the same manner as in the embodiment shown in Figure 3. The transmission by means of the gearwheels 47 and 48 and the conical gear ring 49 in the embodiment shown in Figure 4 as well as the transmission by means of the gearwheels 53, 54 and 55 and the gear ring 56 in the embodiment of Figure 5 entail that, preferably, these gearwheels and gear rings are located inside the transmission box 12 in view of the required lubrication.

In the embodiments as shown in the accompanying drawings, the transmission ratio of the second transmission members has always been chosen to be equal to that of the first transmission members. However, it will be obvious that different ratios can be used, provided it is ensured that the transmission of the drive shaft 18 to the mowing members via the drive shaft 9 in the supporting beam is such that the speed of rotation of the mowing members 1 is equal to that of the further mowing member 16 provided around the housing 4.

## Claims

1. A mowing machine comprising a plurality of mowing members (1) which are arranged capable of rotation about substantially vertical axes to a supporting beam (2), inside which are accommodated the drive means (9) for driving the mowing members (1), which supporting beam (2), during operation, extends above the soil transversely to the direction of operative travel and is connected rigidly to a housing (4), which, relative to the supporting beam (2), extends upwardly, and around which housing (4) there is arranged a further mowing member (16) with, arranged thereon and connected rigidly thereto a drum-shaped element (17), the mowing machine further comprising a transmission box, rigidly connected to the upper portion of the housing (4), with first transmission members (29, 30, 31, 43, 44; 45, 46; 29, 58; 50, 51) for transferring the movement of an ingoing shaft (13) from the transmission box (12) to a drive shaft (18) extending through the housing (4), by means of which drive shaft (18) are driven the drive means (9) in the supporting beam (2), and with second transmission members (29, 30, 31, 40, 42, 41; 29, 30, 31, 40, 42, 41; 29, 47, 31, 48, 49; 50, 51, 18, 53, 54, 52, 55, 56) for transferring the movement of the ingoing shaft (13) to the drum-shaped element (17), characterized in that the second transmission members comprise a transmission (29, 30; 29, 30; 29, 47; 50, 51, 18, 53, 54) for transferring the movement of the ingoing shaft (13) to an auxiliary shaft (31; 52), while a further transmission (40, 42, 41; 40, 42, 41; 48, 49; 55, 56) is provided for transferring the movement of the auxiliary shaft (31; 52) to the drum-shaped element (17).

2. A mowing machine as claimed in claim 1, characterized in that the transmission for transferring the movement of the ingoing shaft (13) to the auxiliary shaft (31) is a conical gear transmission.

3. A mowing machine as claimed in claim 1 or 2, characterized in that the auxiliary shaft (31) extends parallel to the axis of the drum-shaped element (17).

4. A mowing machine as claimed in claim 1, 2 or 3, characterized in that the further transmission is constituted by a belt transmission (40, 41, 42).

5. A mowing machine as claimed in any one of the preceding claims, characterized in that the first transmission members include a cylindrical gear transmission (43, 44) for transferring the movement of the auxiliary shaft (31) to the drive shaft (18).

6. A mowing machine as claimed in any one of claims 1 to 4, characterized in that the second transmission members are arranged such that they are separated from the first transmission members.

7. A mowing machine as claimed in claim 6, characterized in that the first transmission members include a conical gear transmission (45, 46) for transferring the movement of the ingoing shaft (13) to the drive shaft (18).

8. A mowing machine as claimed in claim 1, characterized in that the further transmission is constituted by a second conical gear transmission (48, 49).

9. A mowing machine as claimed in claim 1, characterized in that the first transmission members constitute part of the second transmission members.

10. A mowing machine as claimed in claim 9, characterized in that the second transmission members include, in addition to the first transmission members, a further transmission for transferring the movement of the drive shaft to the drum-shaped element.

11. A mowing machine as claimed in claim 10, characterized in that the further transmission includes a first cylindrical gear transmission (53, 54) for transferring the movement of the drive shaft (18) to an auxiliary shaft (52), as well as a second cylindrical gear transmission (55, 56) for transferring the movement of the auxiliary shaft (52) to the drum-shaped element (17).

12. A mowing machine as claimed in any one of the preceding claims, characterized in that the ingoing shaft (13) of the transmission box (12) is driven from the power take-off shaft of a tractor, to which the machine is coupled during operation.

13. A mowing machine as claimed in any one of the preceding claims, characterized in that at or near the upper end of the drum-shaped element (17) there is arranged therearound and connected rigidly thereto a gear ring (56).

14. A mowing machine as claimed in any one of the preceding claims, characterized in that there is arranged a gear ring (41) surrounding the housing (4) at the upper side of the drum-shaped element (17) and connected rigidly thereto.

## Patentansprüche

1. Mähmaschine mit mehreren Mähgliedern (1), die um im wesentlichen vertikale Achsen drehbar an einem Tragbalken (2) angeordnet sind, in welchem die Antriebseinheit (9) für die Mähglieder (1) untergebracht ist, und der sich im Betrieb quer zur Arbeitsrichtung über dem Boden erstreckt und mit einem Gehäuse (4) starr verbunden ist, das sich in bezug auf den Tragbalken (2) nach oben erstreckt und von einem weiteren Mähglied (16) umgeben ist, das mit einem auf ihm angeordneten trommelförmigen Element (17) starr verbunden ist, wobei die Mähmaschine ferner ein Getriebegehäuse aufweist, das mit dem oberen Teil des Gehäuses (4) starr verbunden ist, und in dem erste Getriebeglieder (29, 30, 31, 43, 44; 45, 46; 29, 58; 50, 51) untergebracht sind, die die Drehbewegung einer Eingangswelle (13) von dem Getriebe (12) auf eine sich durch das Gehäuse (4) hindurch erstreckende Antriebswelle (18) übertragen, mittels der die in dem Tragbalken (2) untergebrachte Antriebseinheit (9) angetrieben wird, sowie zweite Getriebeglieder (29, 30, 31, 40, 42, 41; 29, 30, 31, 40, 42, 41; 29, 47, 31, 48, 49; 50, 51, 18, 53, 54, 52, 55, 56), die die Bewegung der Eingangswelle (13) auf das trommelförmige Element (17) übertragen,
dadurch gekennzeichnet, daß die zweiten Getriebeglieder ein Getriebe (29, 30; 29, 30; 29, 47; 50, 51, 18, 53, 54) bilden, das die Bewegung der Eingangswelle (13) auf eine Zwischenwelle (31; 52) überträgt, und daß ein weiteres Getriebe (40, 42, 41; 40, 42, 41; 48, 49; 55, 56) vorgesehen ist, das die Bewegung der Zwischenwelle (31; 52) auf das trommelförmige Element (17) überträgt.

2. Mähmaschine nach Anspruch 1,
dadurch gekennzeichnet, daß das Getriebe, das die Bewegung der Eingangswelle (13) auf die Zwischenwelle (31) überträgt, ein Kegelradgetriebe ist.

3. Mähmaschine nach Anspruch 1 oder 2,
dadurch gekennzeichnet, daß die Zwischenwelle (31) parallel zu der Achse des trommelförmigen Elementes (17) ausgerichtet ist.

4. Mähmaschine nach Anspruch 1, 2 oder 3,
dadurch gekennzeichnet, daß das weitere Getriebe durch einen Riementrieb (40, 41, 42) gebildet ist.

5. Mähmaschine nach einem der vorhergehenden Ansprüche,
dadurch gekennzeichnet, daß die ersten Getriebeglieder ein Stirnradgetriebe (43, 44) bilden, das die Bewegung der Zwischenwelle (31) auf die Antriebswelle (18) überträgt.

6. Mähmaschine nach einem der Ansprüche 1 bis 4,
dadurch gekennzeichnet, daß die zweiten Getriebeglieder derart angeordnet sind, daß sie von den ersten Getriebegliedern getrennt sind.

7. Mähmaschine nach Anspruch 6,
dadurch gekennzeichnet, daß die ersten Getriebeglieder ein Kegelradgetriebe (45, 46) bilden, das die Bewegung der Eingangswelle (13) auf die Antriebswelle (18) überträgt.

8. Mähmaschine nach Anspruch 1,
dadurch gekennzeichnet, daß das weitere Getriebe durch ein zweites Kegelradgetriebe (48, 49) gebildet ist.

9. Mähmaschine nach Anspruch 1,
dadurch gekennzeichnet, daß die ersten Getriebeglieder zum Teil auch die zweiten Getriebeglieder bilden.

10. Mähmaschine nach Anspruch 9,
dadurch gekennzeichnet, daß die zweiten Getriebeglieder zusätzlich zu den ersten Getriebegliedern ein weiteres Getriebe aufweisen, das die Bewegung der Antriebswelle auf das trommelförmige Element überträgt.

11. Mähmaschine nach Anspruch 10,
dadurch gekennzeichnet, daß das weitere Getriebe ein erstes Stirnradgetriebe (53, 54) aufweist, das die Bewegung der Antriebswelle (18) auf eine Zwischenwelle (52) überträgt, sowie ein zweites Stirnradgetriebe (55, 56), das die Bewegung der Zwischenwelle (52) auf das trommelförmige Element (17) überträgt.

12. Mähmaschine nach einem der vorhergehenden Ansprüche, dadurch gekennzeichnet, daß die Eingangswelle (13) des Getriebes (12) von der Zapfwelle eines Schleppers angetrieben wird, an den die Maschine im Betrieb angeschlossen ist.

13. Mähmaschine nach einem der vorhergehenden Ansprüche, dadurch gekennzeichnet, daß das trommelförmige Element (17) an oder nahe seinem oberen Ende von einem Getriebe-Hohlrad (56) umgeben und mit ihm starr verbunden ist.

14. Mähmaschine nach einem der vorhergehenden Ansprüche, dadurch gekennzeichnet, daß ein das Gehäuse (4) umgebendes Getriebe-Hohlrad (41) an der Oberseite des trommelförmigen Elementes (17) angeordnet und mit diesem starr verbunden ist.

## Revendications

1. Machine faucheuse comprenant une pluralité d'organes faucheurs (1) qui sont disposés en étant capables de tourner autour d'arbres sensiblement verticaux sur une poutre de support (2) à l'intérieur de laquelle sont logés les moyens d'entraînement (9) pour entraîner les organes faucheurs (1), laquelle poutre de support (2) s'étend pendant le travail au dessus du sol, transversalement au sens de marche du travail, et est reliée de manière rigide à un boîtier (4) qui s'étend vers le haut par rapport à la poutre de support (2) et autour duquel boîtier (4) est disposé un autre organe faucheur (16) avec, disposé sur lui et relié à lui de manière rigide, un élément (17) en forme de tambour, la machine faucheuse comprenant en outre une boîte de transmission reliée de manière rigide à la partie supérieure du boîtier (4), avec des premiers organes de transmission (29, 30, 31, 43, 44; 45, 46; 29, 58; 50, 51) pour transmettre le mouvement d'un arbre d'entrée (13) à partir de la boîte de transmission (12) à un arbre d'entraînement (18) s'étendant dans le boîtier (4), au moyen duquel arbre d'entraînement (18) sont entraînés les moyens d'entraînement (9) dans la poutre de support (2), et avec des deuxièmes organes de transmission (29, 30, 31, 40, 42, 41; 29, 30, 31, 40, 42, 41; 29, 47, 31, 48, 49; 50, 51, 18, 53, 54, 52, 55, 56) pour transmettre le mouvement de l'arbre d'entrée (13) à l'élément (17) en forme de tambour, **caractérisée** en ce que les deuxièmes organes de transmission comprennent une transmission (29, 30; 29, 30; 29, 47; 50, 51, 18, 53, 54) pour transmettre le mouvement de l'arbre d'entrée (13) à un arbre auxiliaire (31; 52), tandis qu'une autre transmission (40, 42, 41; 40, 42, 41; 48, 49; 55, 56) est prévue pour transmettre le mouvement de l'arbre auxiliaire (31; 52) à l'élément (17) en forme de tambour.

2. Machine faucheuse selon la revendication 1, caractérisée en ce que la transmission pour transmettre le mouvement de l'arbre d'entrée (13) à l'arbre auxiliaire (31) est une transmission à engrenages coniques.

3. Machine faucheuse selon la revendication 1 ou 2, caractérisée en ce que l'arbre auxiliaire (31) s'étend parallélement à l'axe de l'élément (17) en forme de tambour.

4. Machine faucheuse selon la revendication 1, 2 ou 3, caractérisée en ce que l'autre transmission est constituée par une transmission à courroie (40, 41, 42).

5. Machine faucheuse selon l'une quelconque des revendications précédentes, caractérisée en ce que les premiers organes de transmission comprennent une transmission (43,44) à engrenages cylindriques pour transmettre le mouvement de l'arbre auxiliaire (31) à l'arbre d'entraînement (18).

6. Machine faucheuse selon l'une quelconque des revendications 1 à 4, caractérisée en ce que les deuxièmes organes de transmission sont disposés de telle manière qu'ils sont séparés des premiers organes de transmission.

7. Machine faucheuse selon la revendication 6, caractérisée en ce que les premiers moyens de transmission comportent une transmission à engrenages coniques (45, 46) pour transmettre le mouvement de l'arbre d'entrée (13) à l'arbre d'entraînement (18).

8. Machine faucheuse selon la revendication 1, caractérisée en ce que l'autre transmission est constituée par une deuxième transmission à engrenages coniques (48, 49).

9. Machine faucheuse selon la revendication 1, caractérisée en ce que les premiers organes de transmission constituent une partie des deuxièmes organes de transmission.

10. Machine faucheuse selon la revendication 9, caractérisée en ce que les deuxièmes organes de transmission comprennent, en plus des premiers organes de transmission, une autre transmission pour transmettre le mouvement de l'arbre de transmission à l'élément en forme de tambour.

11. Machine faucheuse selon la revendication 10, caractérisée en ce que l'autre transmission comporte une première transmission (53, 54) à engrenages cylindriques pour transmettre le mouvement de l'arbre d'entraînement (18) à un arbre auxiliaire (52) ainsi qu'une deuxième transmission (55, 56) à engrenages cylindriques pour transmettre le mouvement de l'arbre auxiliaire (52) à l'élément (17) en forme de tambour.

12. Machine faucheuse selon l'une quelconque des revendications précédentes, caractérisée en ce que l'arbre d'entrée (13) de la boîte de transmission (12) est entraîné à partir de l'arbre de prise de force d'un tracteur auquel la machine est couplée pendant le travail.

13. Machine faucheuse selon l'une quelconque des revendications précédentes, caractérisée en ce qu'une couronne dentée (56) est disposée sur l'extrémité supérieure de l'élément (17) en forme de tambour, ou près de cette extrémité, en étant reliée de manière rigide à cet élément (17).

14. Machine faucheuse selon l'une quelconque des revendications précédentes, caractérisée en ce qu'une couronne dentée (41) entourant le boitier (4) est disposée sur le côté supérieur de l'élément (17) en forme de tambour et est reliée à celui-ci de manière rigide.
